# FASCICULE DE BREVET EUROPEEN

(11) **EP 2 735 783 B1**
(45) Date de publication et mention de la délivrance du brevet: **08.07.2015**
(21) Numéro de dépôt: 12306449.5
(22) Date de dépôt: 21.11.2012
(51) Int. Cl.: F16L 41/06

(54) **Robinet de prise en charge à hydrophone et installation de raccordement d'une conduite de dérivation sur une canalisation principale**
Anbohrschieber mit Hydrophon, und Anschlussanlage an eine Verzweigungsleitung einer Hauptkanalisation
Insert valve with hydrophone and facility for connecting a bypass line to a main pipe

(43) Date de publication de la demande: 28.05.2014
(73) Titulaire: SAINTE LIZAIGNE SA, 36260 Sainte Lizaigne (FR); Seba-Dynatronic Mess- und Ortungstechnik GmbH, 96148 Baunach (DE)
(72) Inventeur: Verhee, Damien, F-36100 ISSOUDUN (FR); Beccavin, Vincent, F-36100 Issoudun (FR); Schuberth, Harald, 96149 Breitenguessbach (DE); Stockman, Christophe, F-30660 Gallargues-Le-Montueux (FR)
(74) Mandataire: Coralis Harle

(56) Documents cités:
- EP-A1- 1 052 492
- DE-A1-102006 043 531
- DE-C1- 19 802 884
- DE-U1- 8 404 016
- FR-A1- 2 820 488
- US-A- 4 649 948

## Description

L'invention concerne un robinet de prise en charge à hydrophone pour détection de fuites dans un réseau de distribution d'eau ainsi qu'une installation de raccordement d'une conduite de dérivation sur une canalisation principale. Elle a des applications dans le domaine de la distribution de l'eau et de la gestion et maintenance des réseaux de distribution d'eau.

La maintenance des réseaux de distribution d'eau constitue un enjeu important pour les distributeurs d'eau, qu'ils soient privés ou de services publics. L'inaccessibilité du réseau due au fait qu'il est enterré, rend la surveillance de ce patrimoine très difficile. Outre les problèmes de fonctionnement de matériel (blocage de vannes...) les principales défaillances observées sur les réseaux se traduisent par des fuites.

La diminution des fuites sur les réseaux d'eau est un objectif très important pour les distributeurs d'eau, à tel point que la performance d'un réseau est mesurée par son taux de fuite.

Les conséquences des fuites sur les réseaux peuvent être nombreuses et fortement préjudiciables. La perte d'eau potable et l'appauvrissement de la ressource arrivent en premier lieu. Les fuites entraînent également une perte de pression, donc la nécessité de surdimensionner les installations, notamment pour les sur-presseurs, ainsi que la capacité des installations de traitement de l'eau. Il en résulte aussi l'augmentation de la consommation en énergie associée.

Les fuites d'eau peuvent également engendrer des dommages indirects comme la déstabilisation des sols et les conséquences que cela peut avoir sur les structures installées à proximité (habitation, réseau routier...)

Les distributeurs d'eau disposent actuellement de différents moyens de recherche de fuites. Parmi ceux-ci, on peut citer la détection de fuites par injection de gaz ou par corrélation acoustique. Le premier moyen consiste à injecter un gaz rare dans la canalisation et rechercher sa présence au niveau du sol avec un détecteur ou « renifleur » sur la zone supposée de la fuite. En effet, le gaz sort de la canalisation par l'endroit de la fuite et remonte, dans la mesure des possibilités physiques, à la surface. Ce système est particulièrement adapté à la recherche de fuites très importantes qui génèrent souvent un signal acoustique très faible. Toutefois, ce système suppose d'avoir pré localisé la fuite et le trajet parcouru par la fuite de gaz avant de remonter à la surface est inconnu (par exemple, en zone urbaine (présence d'une gaine) ou terrain argileux ou terrain gelé, le gaz peut effectuer un trajet différent de la verticale). Il faut aussi pouvoir trouver un point d'injection du gaz. Enfin, cela peut entraîner des perturbations liées à la présence de gaz dans le réseau avec des dégradations des compteurs, des perturbations pour l'abonné...

Le second moyen met en oeuvre des pré-localisateurs qui sont des dispositifs acoustiques passifs d'écoute installés en des points d'écoute qui peuvent être des robinets, des vannes... Ce dispositif pré-localisateur est généralement présenté sous forme d'un cylindre comportant un capteur acoustique, une carte électronique, une batterie et un aimant en partie basse du capteur permettant d'assurer un contact stable avec le corps du robinet ou une partie de ce dernier, par exemple avec une partie des moyens de manoeuvre du robinet. La pré-localisation consiste à enregistrer les vibrations acoustiques sur le réseau d'eau, généralement la nuit, lorsque le tirage est faible ou inexistant et que la circulation routière est faible. Toutefois, il y a un appauvrissement et une modification du signal acoustique véhiculé par l'eau et la conduite car ce signal doit traverser le collier de serrage du robinet, le robinet et son joint d'étanchéité à la conduite, la discontinuité entre le robinet et le dispositif pré-localisateur avant d'être enregistré par ce dernier. De plus, la présence d'impuretés entre le robinet et le pré-localisateur peut compromettre la transmission sonore et donc les mesures. En outre, selon la nature de la conduite, la transmission du signal acoustique peut être plus ou moins bonne. Enfin, le pré-localisateur est fixé par aimantation sur les moyens de manoeuvre (en pratique, sur le carré d'ordonnancement/tête de manoeuvre de ces moyens de manoeuvre) et la présence d'un pré-localisateur sur un robinet ou une vanne rend donc sa manoeuvre inaccessible.

La mise en oeuvre de la pré-localisation est une opération relativement complexe puisque l'installation du dispositif se fait généralement par zone d'étude sur une ou plusieurs nuits. Le matériel doit donc être posé puis déposé successivement par zones. Ce qui pose des problèmes d'accessibilité et de sécurité, puisque les bouches à clé donnant accès aux robinets sont généralement sur les chaussées de circulation. En outre, les pré-localisateurs sont généralement déplacés sur les zones étudiées périodiquement en restant dans un emplacement donné vingt-quatre heures ou leurs multiples, la surveillance du réseau est donc locale et sur une durée de temps très réduite, sans base de comparaison du signal enregistré, ce qui correspond en fait à un très faible niveau de surveillance du réseau.

Grâce aux enregistrements des pré-localisateurs, il est possible de localiser la position d'un point de fuite par corrélation des signaux enregistrés en deux points. La fuite émet un signal sonore et le temps d'arrivée aux points d'acquisition varie en fonction de la distance de la fuite aux deux points de mesure respectifs et de la vitesse de propagation du son dans le milieu. Cette technique permet de localiser assez précisément une fuite. Toutefois, ce système suppose d'avoir pré-localisé la fuite et il ne s'agit pas d'un système de surveillance, mais d'un système de localisation d'une fuite connue.

En pratique, les systèmes basés sur l'écoute des vibrations sonores permettent, quand la fuite est audible, une détection fiable et une localisation de la fuite avec précision. La qualité des résultats de ces systèmes dépend toutefois de la qualité acoustique du point d'accès et la qualité de positionnement du dispositif d'écoute.

La présente invention propose un robinet (ou vanne) qui comporte un capteur acoustique qui est au contact direct avec l'eau. Les mesures acoustiques utilisent donc pleinement l'énergie acoustique véhiculée par l'eau.

Ainsi, l'invention concerne un robinet de prise en charge pour raccordement d'une conduite de dérivation sur une canalisation principale d'eau, ledit robinet comportant un corps de robinet avec un orifice amont destiné à être raccordé à la canalisation principale, un orifice aval destiné à être raccordé à la conduite de dérivation et des moyens de manoeuvre du robinet comportant une sphère disposée dans une chambre de manoeuvre agencée dans le corps du robinet entre les deux orifices, et la chambre de manoeuvre étant reliée à l'orifice amont par un canal amont d'un mamelon amont du corps, les moyens de manoeuvre permettant, d'une part, le passage d'un outil de forage de la canalisation principale, et, d'autre part, la commande de la rotation de la sphère pour la mise en communication entre l'orifice amont et l'orifice aval pour ouverture du robinet ou la suppression de la communication pour fermeture du robinet et, notamment, pour fermeture du robinet après forage afin de pouvoir retirer l'outil de forage sans fuite alors que la canalisation principale est en charge.

Selon l'invention, le robinet comporte des moyens de détection de fuite comportant un hydrophone fixé au corps du robinet, un câble de raccordement et un module de surveillance électronique, l'hydrophone étant fixé au robinet en traversant la paroi dudit robinet d'une manière étanche, l'hydrophone comportant une extrémité de captage sonore disposée dans le robinet au contact de l'eau et, opposée, une extrémité de raccordement placée à l'extérieur du robinet, l'extrémité de raccordement recevant d'une manière étanche une extrémité du câble de raccordement possédant un connecteur à son autre extrémité, ledit connecteur étant connecté au module de surveillance électronique, ladite extrémité de captage sonore de l'hydrophone étant positionnée de manière à ne pas interférer mécaniquement avec la sphère et, lors de l'installation du robinet de prise en charge sur la canalisation principale, à ne pas interférer mécaniquement avec le passage de l'outil de forage lors du forage de la canalisation principale, l'hydrophone traverse la paroi de la chambre de manoeuvre, l'extrémité de captage sonore dudit hydrophone débouchant dans une partie d'accueil de la chambre de manoeuvre, cette partie d'accueil de la chambre de manoeuvre étant mise en communication hydrique avec le canal amont du robinet au moins lorsque les moyens de manoeuvre sont en configuration d'ouverture.,

Dans divers modes de mise en oeuvre de l'invention, les moyens suivants pouvant être utilisés seuls ou selon toutes les combinaisons techniquement possibles, sont employés :
- l'hydrophone est fixé au corps du robinet d'une manière permanente,
- l'hydrophone est démontable,
- l'hydrophone est interchangeable,
- le robinet de prise en charge est fixé à la canalisation principale par un collier de serrage,
- le collier de serrage est rigide,
- le collier de serrage est souple,
- le capteur de l'hydrophone est en contact acoustique avec l'eau (contact direct ou indirect), afin de pouvoir mesurer les vibrations acoustiques transmises par l'eau,
- le capteur de l'hydrophone est en outre en contact acoustique avec la paroi du robinet, afin de pouvoir également mesurer les vibrations acoustiques transmises par la paroi du robinet,
- le capteur de l'hydrophone est isolé acoustiquement de la paroi du robinet, afin que les vibrations acoustiques transmises par la paroi du robinet ne puissent pas être mesurées ou, tout au moins, que leur niveau soit négligeable par rapport aux mesures du signal acoustique transmis par l'eau,
- un moyen de communication hydrique entre la partie d'accueil de la chambre de manoeuvre et le canal amont est réalisé au niveau du siège amont de la sphère, à travers ledit siège amont ou dans l'épaisseur de la paroi du robinet attenante audit siège amont,
- le siège amont de la sphère est étanche,
- le siège aval de la sphère est étanche,
- un percement en T est ménagé dans la sphère pour mettre en communication hydrique la partie d'accueil de la chambre de manoeuvre avec le canal amont du robinet lorsque les moyens de manoeuvre sont en configuration d'ouverture,
- un double percement en T est ménagé dans la sphère pour mettre en communication hydrique la partie d'accueil de la chambre de manoeuvre avec le canal amont du robinet aussi bien lorsque les moyens de manoeuvre sont en configuration d'ouverture que lorsqu'ils sont en configuration de fermeture,
- le robinet comporte un mamelon supplémentaire relié à la chambre de manoeuvre, ledit mamelon supplémentaire pouvant recevoir l'hydrophone ou, dans une autre configuration d'installation, pouvant servir au raccordement de la conduite de dérivation ou, encore, pouvant recevoir les moyens de manoeuvre, le mamelon aval recevant alors l'hydrophone à la place de ladite conduite de dérivation,
- le robinet comporte quatre mamelons dont un mamelon amont coté canalisation principale, les trois autres mamelons étant structurellement identiques et configurés pour recevoir chacun un des éléments suivants : les moyens de manoeuvre, l'hydrophone, la conduite de dérivation, afin de pouvoir réaliser une prise sur le dessus, sur le côté droit ou sur le côté gauche avec ledit même robinet à hydrophone,
- l'extrémité de captage sonore de l'hydrophone est disposée dans le canal amont, l'hydrophone étant fixé au mamelon amont en traversant la paroi de ce dernier,
- l'hydrophone traverse la paroi du mamelon amont obliquement, l'extrémité de captage sonore de l'hydrophone étant dirigée inclinée vers l'orifice amont,
- le câble est un câble de transmission de signaux électriques et/ou optiques,
- les signaux sont choisis parmi des signaux de mesures du capteur, d'excitation du capteur, d'alimentation électrique,
- le câble est un câble électrique,
- le câble est un câble à fibre(s) optique(s),
- le câble est un câble mixte électrique et à fibre(s) optique(s),
- l'hydrophone comporte un capteur acoustique,
- le capteur acoustique est un capteur optique,
- le capteur acoustique est un microphone électrodynamique,
- le capteur acoustique est un microphone électret,
- le capteur acoustique est un microphone piézoélectrique,
- l'hydrophone comporte un capteur acoustique et des circuits électroniques, l'alimentation électrique des circuits électroniques provenant de l'extérieur de l'hydrophone par l'intermédiaire du câble électrique,
- les circuits électroniques de l'hydrophone comportent des moyens de conditionnement du signal produit par le capteur acoustique,
- les moyens de conditionnement sont des moyens analogiques,
- les moyens de conditionnement sont des moyens mixtes analogiques et numériques,
- les moyens de conditionnement sont choisis notamment parmi un ou plusieurs des moyens suivants : pré-amplification du signal, filtrage fréquentiel du signal, numérisation du signal, détection de signaux,
- le module de surveillance électronique comporte une source d'alimentation électrique,
- la source d'alimentation électrique est autonome,
- la source d'alimentation électrique est reliée à un réseau de distribution d'électricité,
- la source d'alimentation électrique est choisie parmi une ou plusieurs des sources suivantes : électrochimique autonome, électrochimique rechargeable, super-condensateur rechargeable, alimentation par réseau de distribution électrique,
- le module de surveillance électronique comporte des moyens analogiques,
- le module de surveillance électronique comporte des moyens mixtes analogiques et numériques,
- le module de surveillance électronique comporte un ou plusieurs des moyens suivants : pré-amplification du signal, filtrage fréquentiel du signal, numérisation du signal, détection de signaux, enregistrement de signaux, de télétransmission, de radio transmission, de génération d'alarme,
- la télétransmission est filaire et/ou sans fil, optique ou radioélectrique, et dans ce dernier cas par radio transmission,
- le robinet comporte un moyen de butée limitant l'introduction de l'extrémité de captage sonore de l'hydrophone dans le robinet,
- le moyen de butée est un épaulement de l'hydrophone venant buter contre la face externe de la paroi du robinet,
- l'hydrophone est fixé à la paroi du mamelon amont par un ou plusieurs des moyens suivants : collage, soudage, brasage, vissage, sertissage,
- l'hydrophone traverse la paroi du mamelon amont sensiblement perpendiculairement,
- l'hydrophone traverse la paroi du mamelon amont obliquement, l'extrémité de captage sonore de l'hydrophone étant dirigée vers la chambre de manoeuvre,
- le robinet est un robinet de prise en charge à choix de sortie, les moyens de manoeuvre pouvant être placés dans deux configurations, une première dans laquelle l'orifice amont et l'orifice aval sont sur un même axe droit et une seconde dans laquelle l'orifice amont et l'orifice aval sont à 90 °,
- le robinet à choix de sortie comporte des moyens permettant de placer, au choix, la conduite de dérivation sur l'axe de forage de la canalisation principale ou perpendiculairement à l'axe de forage de la conduite principale.

L'invention concerne également une installation de raccordement d'une conduite de dérivation sur une canalisation principale par un robinet de prise en charge comportant des moyens de manoeuvre, l'installation de raccordement étant enterrée dans un sol, les moyens de manoeuvre du robinet étant accessibles à distance à partir de la surface du sol à l'extrémité inférieure d'un tube de bouche à clé débouchant à la surface du sol.

L'installation de raccordement est telle que le robinet est un robinet de prise en charge à hydrophone, câble de raccordement et module de surveillance électronique tel que décrit et l'hydrophone comporte un câble de raccordement comportant à son extrémité libre un connecteur et ledit câble de raccordement remonte le long du tube de bouche à clé vers un réceptacle accessible à partir de la surface du sol, le connecteur étant disposé avec le module de surveillance électronique dans ledit réceptacle.

Dans diverses variantes de l'installation de raccordement, les moyens suivants pouvant être utilisés seuls ou selon toutes les combinaisons techniquement possibles, sont considérés:
- le câble est fixé au tube de bouche à clé,
- le câble est à l'intérieur du tube de bouche à clé,
- le câble est à l'extérieur du tube de bouche à clé,
- le réceptacle est un boîtier indépendant du tube de bouche à clé
- le réceptacle est un boîtier solidaire du tube de bouche à clé et disposé vers l'extrémité supérieure dudit tube de bouche à clé,
- le tube de bouche à clé est fermé à son extrémité supérieure par un couvercle amovible,
- le couvercle amovible fermant l'extrémité supérieure du tube de bouche à clé est solidaire dudit tube de bouche à clé,
- le couvercle amovible fermant l'extrémité supérieure du tube de bouche à clé appartient à un chapeau de protection installé à l'extrémité supérieure dudit tube de bouche à clé,
- le boîtier est fermé à son extrémité supérieure par un couvercle amovible,
- les couvercles amovibles du tube de bouche à clé et du boitier sont des couvercles indépendants,
- les couvercles amovibles du tube de bouche à clé et du boitier sont un seul et même couvercle commun.

La présente invention, sans qu'elle en soit pour autant limitée, va maintenant être exemplifiée avec la description qui suit de modes de réalisation et de mise en oeuvre en relation avec :
la Figure 1 qui représente une vue en coupe d'une installation de raccordement d'eau avec un premier robinet de prise en charge selon l'invention,
la Figure 2 qui représente une vue en perspective et coupe d'une installation de raccordement d'eau avec un deuxième robinet de prise en charge selon l'invention,
la Figure 3 qui représente une vue en perspective d'une installation de raccordement d'eau avec le deuxième robinet de prise en charge,
la Figure 4 qui représente un agrandissement d'une coupe d'une partie d'une installation de raccordement d'eau avec le deuxième robinet de prise en charge,
les Figures 5a (vue pleine) et 5b (vue en transparence) qui représentent une sphère à double percement en T permettant d'assurer une communication entre le canal amont et la partie d'accueil de la chambre de manoeuvre, aussi bien en configuration ouverte que fermée du robinet, et
la Figure 6 qui représente un robinet de prise en charge qui vient d'être fixé sur une canalisation principale dont on s'apprête à percer la paroi grâce à un outil de forage.

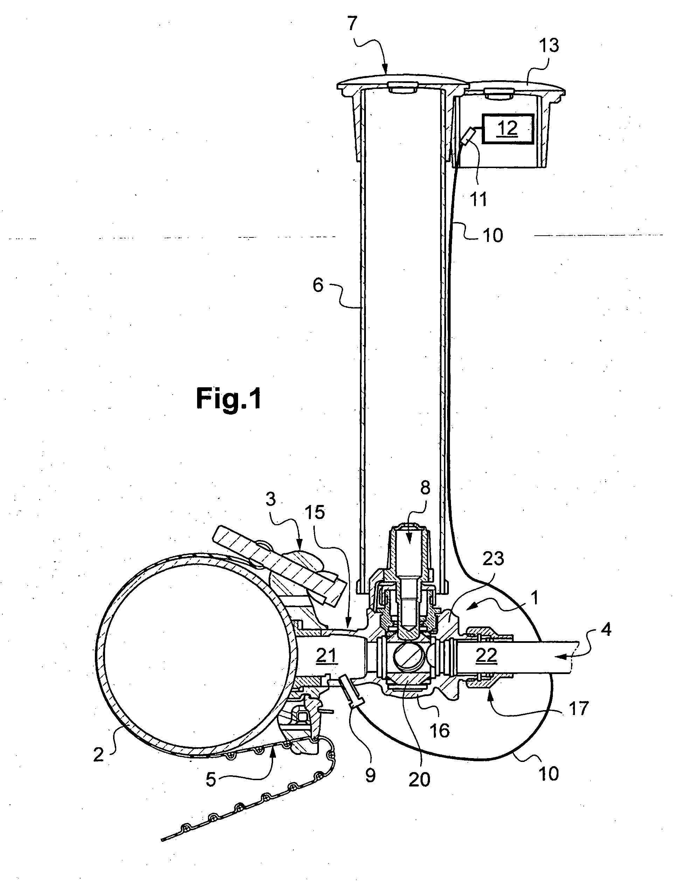

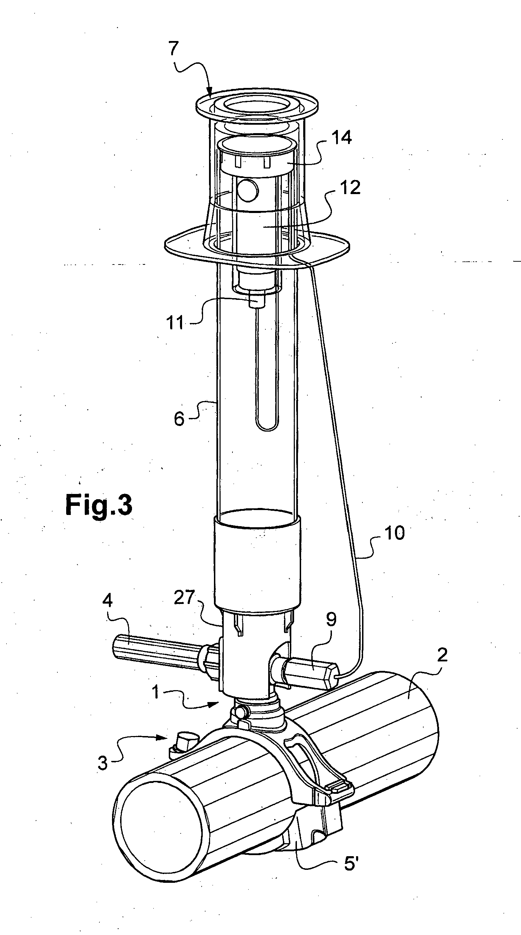

Deux exemples de réalisation de robinet de prise en charge avec hydrophone vont maintenant être présentés en relation avec des Figures (Figures 1 à 3) montrant leurs utilisations dans des installations de raccordement d'eau au sein d'un réseau de distribution d'eau. Le raccordement permet de relier à une canalisation principale 2 d'eau, une conduite de dérivation 4 destinée à la fourniture d'eau à au moins un abonné au service de distribution d'eau. Afin de pouvoir contrôler la fourniture d'eau, un robinet 1 est installé entre la canalisation principale 2 et la conduite de dérivation 4. Le robinet est un robinet de prise en charge, c'est-à-dire qu'il est installé sur la canalisation principale 2 alors que cette dernière est en charge, sous pression, ce qui permet de créer une nouvelle installation de raccordement de l'eau sans perturber la distribution de l'eau aux autres abonnés déjà reliés à la canalisation principale. Le robinet de prise en charge 1 est en général fixé à la canalisation principale 2 par un moyen de serrage et fixation du type selle 3 et moyen de serrage du type sangle 5 ou collier rigide 5'. De préférence, on met en oeuvre un robinet de prise en charge qui permet, au choix, une prise sur le côté ou sur le dessus de la canalisation principale comme sur les deux exemples des Figures 1 et 2, 3. A titre d'exemples de robinets et de colliers de prise en charge on peut citer ceux mentionnés dans les documents FR2938040, FR2820488, FR2820487, FR2785359.

D'une manière générale, le robinet de prise en charge comporte des moyens de manoeuvre comportant notamment une sphère 20, 20' et un chapeau de manoeuvre 8. Les moyens de manoeuvre permettent d'ouvrir ou de fermer le robinet pour autoriser ou non la distribution de l'eau. La sphère est dans une partie du corps 23 du robinet appelée chambre de manoeuvre 16. La chambre de manoeuvre 16 est en communication avec une partie amont du corps du robinet 1 appelée mamelon amont 15 et délimitant un canal amont 21 interne qui se termine en amont, coté canalisation principale 2, par un orifice amont 15.1 en communication avec l'intérieur de la canalisation principale 2 à travers un trou foré dans la paroi de ladite canalisation principale 2. La chambre de manoeuvre 16 est aussi en communication avec une partie aval du corps 23 du robinet 1 appelée mamelon aval 17 et délimitant un canal aval 22 interne qui se termine en aval, coté conduite de dérivation 4, par un orifice aval 17.1. La sphère 20, 20' est installée dans cette chambre de manoeuvre 16 sur des sièges qui assurent l'étanchéité entre l'amont et l'aval lorsque le robinet est en configuration fermée. Une partie des moyens de manoeuvre, en pratique un axe de manoeuvre étendu entre le chapeau de manoeuvre 8 et la sphère 20, 20', traverse un mamelon dit mamelon de manoeuvre.

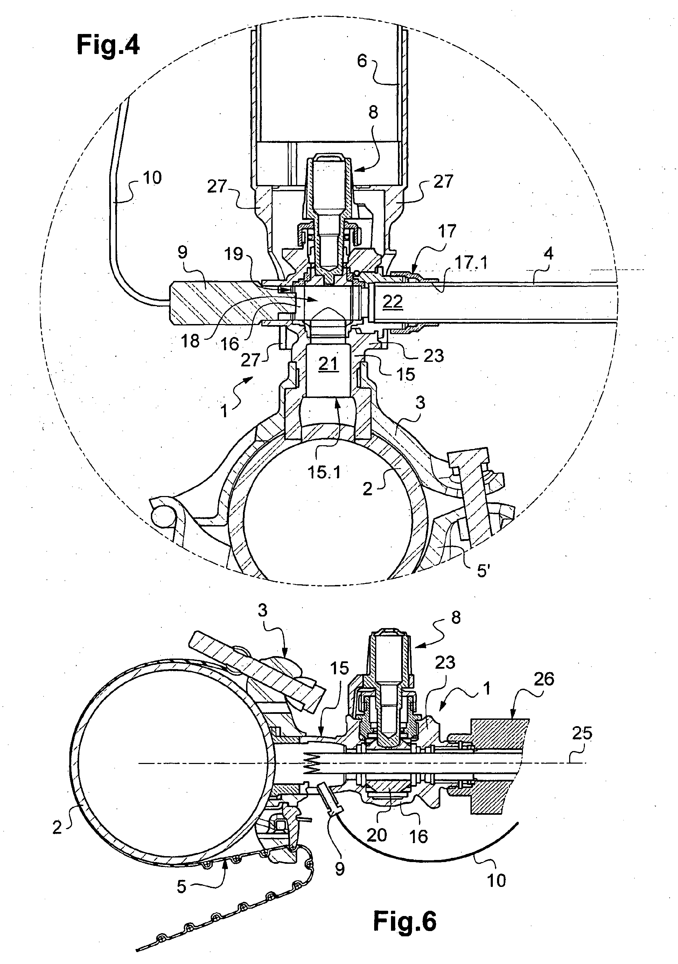

Comme représenté Figure 6, lors de l'installation de la prise en charge, la canalisation principale est forée par un outil de forage 26 monté temporairement sur le robinet de prise en charge. L'outil de forage 26 comporte un foret du type scie cloche, qui s'engage dans le robinet en passant dans un percement de la sphère 20, entre deux faces opposées de la sphère, la sphère ayant été orientée afin que ledit percement de la sphère soit aligné sur l'axe de forage 25.

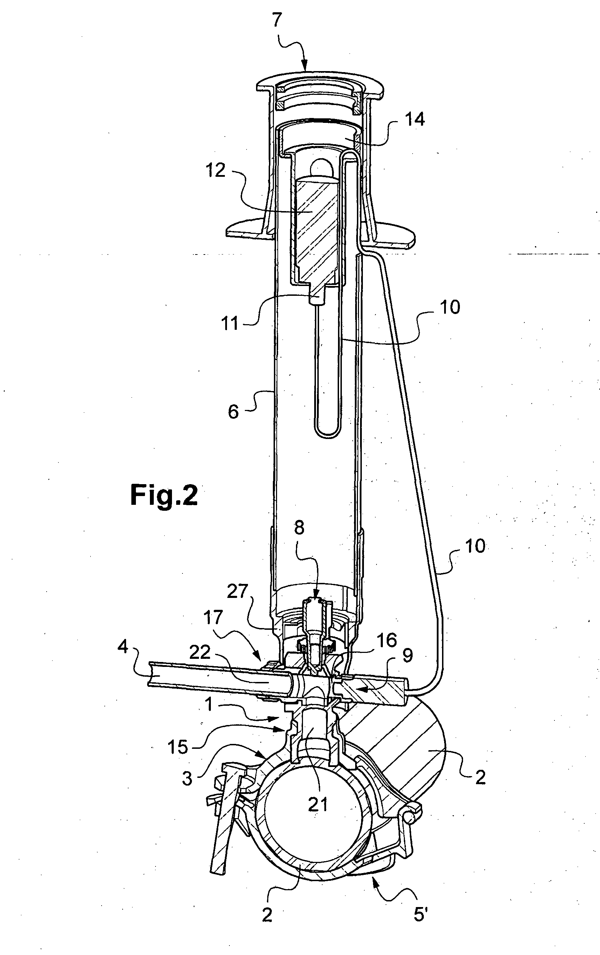

De préférence, ce robinet est à choix de position de sortie, entre une sortie aval dans l'axe du forage de la canalisation principale (comme représenté Figure 1 et Figure 6) ou une sortie aval perpendiculaire à cet axe (comme représenté Figures 2, 3 et 4).

L'installation de raccordement est classiquement enterrée et les moyens de manoeuvre sont accessibles au fond d'un puits, dans le sol, constitué par un tube de bouche à clé 6. A la surface du sol, une tête de bouche à clé 7 est positionnée au-dessus du tube de bouche à clé 6 et elle comporte un couvercle de fermeture amovible permettant d'accéder aux moyens de manoeuvre du robinet 1, en pratique au chapeau de manoeuvre 8, et de le manoeuvrer grâce à une clé dont l'extrémité inférieure peut venir en prise sur ledit chapeau de manoeuvre 8 et dont l'extrémité supérieure comporte une poignée.

En outre, comme représenté sur les Figures 2, 3 et 4, le robinet de prise en charge peut être recouvert par un tabernacle 27 qui le protège du terrain environnant et qui s'emboîte avec le tube de bouche à clé 6.

Le robinet 1 de prise en charge de l'invention comporte un hydrophone 9 permettant de mesurer les bruits d'écoulement et de fuite provenant du réseau de distribution d'eau. Ainsi, dans son principe, l'invention consiste à incorporer un hydrophone à un robinet de prise en charge de façon permanente, sur la durée de vie du robinet. Cet hydrophone est raccordé à un câble de liaison qui remonte dans une gaine spécifique ou dans le tube de bouche à clé pour être raccordé en partie haute, à la partie supérieure de la bouche à clé ou dans un regard double, un regard parallèle ou un réceptacle dédié 13, par l'intermédiaire d'un connecteur, à un module de surveillance électronique. Le module de surveillance électronique comporte au moins des moyens de surveillance mais il peut comporter en outre notamment des moyens d'enregistrement, d'émission de données et éventuellement de traitement du signal adapté à la détection acoustique des fuites. De préférence, l'hydrophone et le câble de liaison forment un élément indissociable assurant ainsi une étanchéité et isolation entre eux vis-à-vis du terrain environnant. Ainsi, l'ensemble hydrophone-câble de liaison de raccordement est complètement étanche. Le connecteur de raccordement est étanche pour résister aux contraintes de l'environnement.

Si, de préférence, le câble de liaison est un câble électrique, il peut également comporter en outre ou en alternative des moyens de liaison optiques du type fibre optique au cas où l'hydrophone comporterait un capteur acoustique à fibre optique au lieu d'un capteur acoustique électrique/électrodynamique. Ainsi dans une variante à capteur optique, il n'y a pas besoin de relier l'hydrophone à la source d'alimentation électrique du module électronique et le câble ne comporte qu'une (ou plusieurs) fibres optiques.

Le premier robinet de prise en charge représenté dans l'installation de raccordement de la Figure 1 comporte un hydrophone 9 dont l'extrémité de captage sonore est disposée dans le canal amont 21 du robinet 1. La mesure par le capteur acoustique de l'hydrophone se faisant directement au contact de l'eau, le signal acoustique n'est pas affaibli ou distordu comme dans les solutions traditionnelles dans lesquelles un capteur piézométrique est rapporté, posé sur le corps du robinet ou sur une partie des moyens de manoeuvre et maintenu temporairement par aimantation.

L'hydrophone 9 du robinet de la Figure 1 traverse donc la paroi du mamelon amont 15 délimitant le canal amont 21 d'une manière étanche et est disposé en oblique afin que son extrémité de captage sonore soit orientée en direction de l'orifice amont 15.1 du robinet et donc en direction de la canalisation principale 2. De cette manière, les ondes de pression vibratoires dues aux fuites arrivent sur l'extrémité de captage sonore de telle façon que l'hydrophone soit parfaitement excité par ces ondes, ce qui améliore encore la sensibilité du système.

On comprend que l'extrémité de captage sonore de l'hydrophone 9 du robinet de la Figure 1 entre dans le canal amont de telle manière qu'elle ne gêne pas le passage de l'outil de forage 26 de la canalisation principale 2 qui est utilisé lors de l'installation du robinet de prise en charge. Dans une variante, l'hydrophone peut être plus ou moins enfoncé à travers la paroi du mamelon amont, par exemple par vissage ou dévissage, et le robinet est livré avec un hydrophone non complètement vissé, l'opérateur assurant l'installation du robinet de prise en charge ne le vissant complétement qu'une fois la canalisation principale forée et l'outil retiré. Dans des variantes, on prévoit des moyens de butée limitant l'entrée de l'hydrophone dans le canal amont du robinet.

Le deuxième robinet de prise en charge représenté dans l'installation de raccordement des Figures 2, 3 et 4 comporte un hydrophone 9 dont l'extrémité de captage sonore est disposée dans la chambre de manoeuvre 16.

De préférence, la partie d'accueil 19 de la chambre de manoeuvre 16 dans laquelle se trouve l'extrémité de captage sonore est remplie d'eau et on prévoit donc un moyen pour que l'eau communique entre cette partie d'accueil 19 et le canal amont 21 et ceci, de préférence, que le robinet soit ouvert ou fermé. Sur l'agrandissement sur la Figure 4, on peut voir que la partie d'accueil 19 de la chambre de manoeuvre 16 est à l'opposé du mamelon aval 17 et du canal aval 22 correspondant ainsi que de la conduite de dérivation 4. On peut également voir plus précisément sur la Figure 4 le moyen permettant que cette partie d'accueil 19 de la chambre de manoeuvre communique avec le canal amont 21 et qui est, dans cet exemple, un perçage interne 18 de la sphère de manoeuvre 20, perçage en T, avec la partie horizontale du T étendue entre la partie d'accueil et le canal aval (le robinet étant alors en configuration ouverte) et la partie verticale du T communicant avec le canal amont. Dans cette configuration ouverte du robinet sur la Figure 4, l'eau du canal amont 21 communique avec la partie d'accueil 19 de la chambre de manoeuvre 16 comportant la sphère 20. On comprend qu'avec une telle disposition de perçage 18 en T à travers la sphère 20, l'eau amont ne communique plus avec la partie d'accueil 19 de la chambre de manoeuvre 16 lorsque le robinet est fermé car la partie horizontale du T, qui est droite, est alors tournée de 90° dans un plan horizontal par rapport à la représentation de la Figure 4. On comprend également que cette disposition de perçage 18 en T à travers la sphère 20 est adaptée pour l'installation et le perçage de la canalisation principale par l'outil de perçage, la partie du T qui était horizontale sur la Figure 4 étant alors verticale et le foret de l'outil de perçage la traversant.

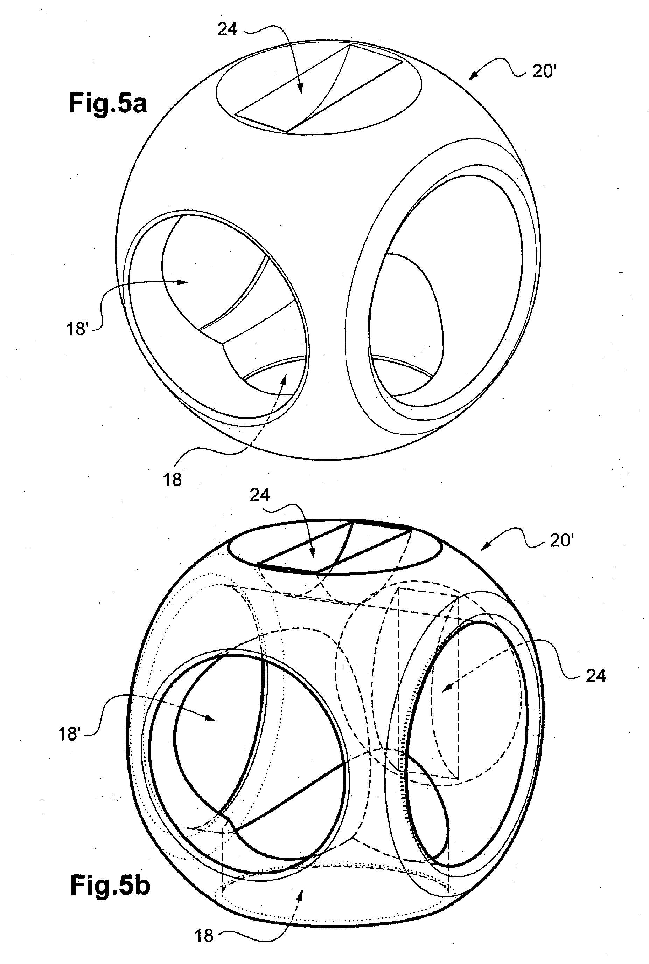

D'autres dispositions de perçage de la sphère sont possibles. Par exemple sur les Figures 5a et 5b, la sphère 20' peut comporter un double percement interne en T, les deux percements en T ayant en commun leurs deux barres horizontales, et l'un des T, le T 18 étant vertical et l'autre T, le T 18' étant horizontal. Cette dernière disposition permet que la partie d'accueil 19 de la chambre de manoeuvre 16 soit en communication avec le canal amont dans les deux configurations ouverte et fermée du robinet : le percement en T horizontal 18' assurant la communication en configuration fermée. La sphère 20' comporte donc un percement horizontal diamétral entre deux cotés opposées (partie commune des deux T) sur lequel deux percements radiaux se raccordent centralement (chaque percement radial ne débouche que d'un côté de la sphère), un percement radial étant vertical et l'autre horizontal.

On peut noter la présence, sur ces Figures 5a et 5b d'une sphère de robinet de prise en charge à choix de sortie (soit droite, dans l'axe du forage de la canalisation principale, soit à 90° de cet axe), d'empreintes 24 destinées à recevoir l'extrémité d'un axe de manoeuvre permettant de faire tourner la sphère sur ses sièges dans la chambre de manoeuvre. Ces empreintes 24 sont au nombre de deux par sphère de robinet de prise en charge à choix de sortie. L'axe de manoeuvre des moyens de manoeuvre peut être positionné dans un des mamelons du robinet, en face de l'empreinte correspondante, en fonction de la sortie choisie (droite ou à 90 °).

A noter que dans une variante, on peut prévoir une configuration des moyens de manoeuvre, notamment de la sphère, dans laquelle la partie d'accueil de la chambre de manoeuvre n'est pas en communication avec le canal amont et, de préférence, aussi, n'est pas en communication avec le canal aval, afin de permettre un éventuel démontage et remplacement de l'hydrophone sans qu'il n'y ait de fuite d'eau conséquente.

Dans une variante du deuxième robinet de prise en charge, le robinet comporte un mamelon supplémentaire relié à la chambre de manoeuvre et destiné à recevoir l'hydrophone d'une manière étanche. Dans ce dernier cas, on peut prévoir que le mamelon supplémentaire puisse être utilisé pour connexion à la conduite de dérivation (ou recevoir les moyens de manoeuvre) et l'hydrophone est alors placé sur l'autre mamelon qui était qualifié d'aval dans les exemples précédents (ou sur le mamelon qui recevait les moyens de manoeuvre dans les exemples précédents) : le robinet de prise en charge comporte alors quatre mamelons utilisables au choix (un amont, un aval, un pour passage des moyens de manoeuvre, un pour l'hydrophone) ou, alors trois mamelons utilisables au choix (un aval, un pour passage des moyens de manoeuvre, un pour l'hydrophone), le mamelon amont étant un mamelon spécifique non fonctionnellement interchangeable avec les autres.

Grâce à la répartition des hydrophones dans les installations de raccordement utilisant des robinets de prise en charge le long du réseau de distribution d'eau, on dispose de véritables points d'écoute sur le réseau de distribution avec une taille de maillage que l'on peut définir en fonction de la nature des conduites utilisées, notamment du fait qu'elles sont rigides ou en matière plastique. La surveillance du réseau de distribution d'eau devient ainsi continue sur toute sa durée de vie. La taille du maillage de surveillance est à définir en fonction des matériaux des canalisations/conduites utilisées.

Des signaux de référence/de base sont enregistrés en tous les points de mesure du réseau neuf ou d'un réseau dont on a vérifié la qualité et on peut par comparaison détecter toutes émergences/modifications des signaux pouvant correspondre à une fuite. Toujours grâce au robinet de l'invention, l'accès au chapeau de manoeuvre (carré d'ordonnancement) est conservé et le matériel de surveillance, notamment le module électronique, est totalement protégé.

L'hydrophone étant à ce jour le meilleur dispositif d'écoute connu, il permet de recueillir un signal de très bonne qualité puisqu'il capte le signal acoustique dans le milieu dans lequel il a été émis. Le raccordement en surface permet d'installer de multiples solutions électroniques. Il permet également de conserver l'évolutivité du système, d'en assurer la maintenance et de faire profiter à un réseau de distribution d'eau avec surveillance acoustique déjà installée des nouvelles innovations électroniques et/ou informatiques, par exemple de nouvelles générations d'enregistreurs (« loggers ») ou des moyens de connexion directe aux émetteurs d'un corrélateur, en changeant le module électronique facilement accessible vers la surface du sol. Cette disposition du module de surveillance électronique, déporté en surface, permet en outre également le remplacement aisé de la source d'alimentation électrique dans le cas où cette dernière est ou comporte une pile électrique, voire une batterie électrique que l'on rechargerait ailleurs. Le connecteur de raccordement du câble de liaison est situé vers la surface du sol, dans le réceptacle accessible depuis la chaussée, réceptacle 14 commun au tube de bouche à clé ou à la tête de bouche à clé ou, alors, dans un réceptacle spécifique 13 distinct. Le module de surveillance électronique peut rester à demeure ou être installé ponctuellement selon les besoins. Le module de surveillance électronique peut être changé afin d'intégrer les dernières innovations électroniques durant toute la vie du réseau.

Le signal acoustique mesuré, qui peut être enregistré et ensuite récupéré, peut être utilisé et analysé de différentes manières, soit localement, en fonction du module de surveillance choisi, soit centralement, dans des moyens de calculs centralisés, globaux à tout le réseau ou correspondant seulement à un sous ensemble, de préférence géographique, de ce réseau. Le module de surveillance électronique pourra intégrer une fonction de corrélation qui pourra ainsi être automatisée et être opérationnelle la nuit, période la plus adaptée à la recherche de fuite, voire être remplacé temporairement par un émetteur de corrélateur pour procéder à des mesures de corrélation instantanée. Le module de surveillance électronique peut être un pré localisateur. Il assure ainsi la surveillance du réseau en continu et permet de détecter tout changement de signal sonore aussi faible soit-il. Le robinet de l'invention peut être installé lors de la construction initiale du réseau, ce qui permet de disposer du bruit normal généré par un réseau neuf (testé et éprouvé sans fuite) comme base d'analyse au traitement du signal pour la surveillance future. Le robinet de l'invention peut également être installé sur un réseau existant.

Le signal enregistré par module de surveillance électronique fonctionnant en pré localisateur peut être communiqué de différente manière au service de surveillance du réseau :
Par lecture directe sur le module de surveillance par le service de surveillance du réseau.
Par transmission par ondes radio ou wifi du module de surveillance vers un véhicule de surveillance lors de son passage à proximité de l'installation avec le robinet de l'invention.
Par transmission par ondes radio vers un transmetteur relais recueillant les signaux dans un périmètre donné pour les envoyer vers le service de surveillance. Par transmission GSM intégré au module de surveillance permettant ainsi l'envoi direct vers le service de surveillance.
Par tout autre système de transmission actuel ou à venir en remplaçant le module de surveillance.

Dans les cas de longues parties de réseau sans branchement, par exemple dans une portion d'acheminement de l'eau vers un hameau, un hydrophone avec son module de surveillance électronique peut être installé sur un bouchon ou sur une selle de branchement obturable installé sur ladite portion. Grâce à la mise en oeuvre de robinets et de colliers de prise en charge multi-diamètres, le dispositif est adaptable à l'ensemble des diamètres et des matières de conduites disponibles sur le marché.

En cas de nécessité, le module de pré localisation pourra être utilisé comme corrélateur ou être remplacé momentanément par un corrélateur afin de réaliser la localisation d'une fuite.

Toutes les technologies de corrélation pour localisation de fuites pourront être utilisées sur la base du dispositif.

La mise en oeuvre du robinet de surveillance dans une installation de raccordement est identique à celle d'un robinet de prise en charge standard, elle nécessite seulement de prévoir le passage de la gaine contenant le câble de liaison livrée avec le robinet de prise en charge et la pose d'une tête de bouche à clé spécifique ou d'un réceptacle spécifique contenant le module de surveillance électronique.

D'une manière générale, la solution proposée par l'invention est applicable aux réseaux d'eau potable, ainsi qu'à tout réseau de transport de fluide liquide ou gazeux.

## Revendications

1. Robinet (1) de prise en charge pour raccordement d'une conduite de dérivation (4) sur une canalisation principale (2) d'eau, ledit robinet comportant un corps de robinet (23) avec un orifice amont (15.1) destiné à être raccordé à la canalisation principale (2), un orifice aval (17.1) destiné à être raccordé à la conduite de dérivation (4) et des moyens de manoeuvre (8, 20, 20') du robinet comportant une sphère (20, 20') disposée dans une chambre de manoeuvre (16) agencée dans le corps (23) du robinet (1) entre les deux orifices, et la chambre de manoeuvre (16) étant reliée à l'orifice amont (15.1) par un canal amont (21) d'un mamelon amont (15) du corps, les moyens de manoeuvre permettant, d'une part, le passage d'un outil de forage (26) de la canalisation principale (2), et, d'autre part, la commande de la rotation de la sphère (20 ; 20') pour la mise en communication entre l'orifice amont et l'orifice aval pour ouverture du robinet ou la suppression de la communication pour fermeture du robinet et, notamment, pour fermeture du robinet après forage afin de pouvoir retirer l'outil de forage (26) sans fuite alors que la canalisation principale est en charge,
**caractérisé en ce que** le robinet comporte des moyens de détection de fuite comportant un hydrophone (9) fixé au corps (23) du robinet, un câble de raccordement (10) et un module de surveillance électronique (12), l'hydrophone étant fixé au robinet en traversant la paroi dudit robinet d'une manière étanche, l'hydrophone (9) comportant une extrémité de captage sonore disposée dans le robinet au contact de l'eau et, opposée, une extrémité de raccordement placée à l'extérieur du robinet, l'extrémité de raccordement recevant d'une manière étanche une extrémité du câble de raccordement (10) possédant un connecteur (11) à son autre extrémité, ledit connecteur (11) étant connecté au module de surveillance électronique (12), ladite extrémité de captage sonore de l'hydrophone étant positionnée de manière à ne pas interférer mécaniquement avec la sphère et, lors de l'installation du robinet de prise en charge sur la canalisation principale (2), à ne pas interférer mécaniquement avec le passage de l'outil de forage (26) lors du forage de la canalisation principale (2), et
**en ce que** l'hydrophone (9) traverse la paroi de la chambre de manoeuvre (16), l'extrémité de captage sonore dudit hydrophone débouchant dans une partie d'accueil (19) de la chambre de manoeuvre (16), cette partie d'accueil (19) de la chambre de manoeuvre étant mise en communication hydrique avec le canal amont (21) du robinet au moins lorsque les moyens de manoeuvre (8, 20; 20') sont en configuration d'ouverture.

2. Robinet selon la revendication 1, **caractérisé en ce qu'**un percement en T (18) est ménagé dans la sphère (20) pour mettre en communication hydrique la partie d'accueil (19) de la chambre de manoeuvre (16) avec le canal amont (21) du robinet (1) lorsque les moyens de manoeuvre (8, 20) sont en configuration d'ouverture.

3. Robinet selon la revendication 1, **caractérisé en ce qu'**un double percement en T (18; 18') est ménagé dans la sphère (20') pour mettre en communication hydrique la partie d'accueil (19) de la chambre de manoeuvre (16) avec le canal amont (21) du robinet (1) aussi bien lorsque les moyens de manoeuvre (8 ; 20') sont en configuration d'ouverture que lorsqu'ils sont en configuration de fermeture (18; 18').

4. Robinet selon l'une quelconque des revendications précédentes, **caractérisé en ce qu'**il comporte un moyen de butée limitant l'introduction de l'extrémité de captage sonore de l'hydrophone (9) dans le robinet.

5. Robinet selon l'une quelconque des revendications précédentes, **caractérisé en ce qu'**il comporte des moyens permettant de placer, au choix, la conduite de dérivation (4) sur l'axe de forage (25) de la canalisation principale (2) ou perpendiculairement à l'axe de forage (25) de la conduite principale.

6. Robinet selon l'une quelconque des revendications précédentes, **caractérisé en ce que** le capteur de l'hydrophone est en outre en contact acoustique avec la paroi du robinet, afin de pouvoir également mesurer les vibrations acoustiques transmises par la paroi du robinet.

7. Robinet selon l'une quelconque des revendications précédentes, **caractérisé en ce qu'**il comporte un mamelon supplémentaire relié à la chambre de manoeuvre, ledit mamelon supplémentaire pouvant recevoir l'hydrophone ou, dans une autre configuration d'installation, pouvant servir au raccordement de la conduite de dérivation ou, encore, pouvant recevoir les moyens de manoeuvre, le mamelon aval recevant alors l'hydrophone à la place de ladite conduite de dérivation.

8. Robinet selon la revendication 7, **caractérisé en ce qu'**il comporte quatre mamelons dont un mamelon amont coté canalisation principale, les trois autres mamelons étant structurellement identiques et configurés pour recevoir chacun un des éléments suivants : les moyens de manoeuvre, l'hydrophone, la conduite de dérivation, afin de pouvoir réaliser une prise sur le dessus, sur le côté droit ou sur le côté gauche avec ledit même robinet à hydrophone.

9. Installation de raccordement d'une conduite de dérivation sur une canalisation principale par un robinet (1) de prise en charge comportant des moyens de manoeuvre (8, 20 ; 20'), l'installation de raccordement étant enterrée dans un sol, les moyens de manoeuvre du robinet étant accessibles à distance à partir de la surface du sol à l'extrémité inférieure d'un tube de bouche à clé (6) débouchant à la surface du sol, **caractérisé en ce que** le robinet est un robinet de prise en charge à hydrophone (9), câble de raccordement (10) et module de surveillance électronique (12) selon l'une quelconque des revendications précédentes, et **en ce que** l'hydrophone comporte un câble de raccordement comportant à son extrémité libre un connecteur (11) et que ledit câble de raccordement remonte le long du tube de bouche à clé vers un réceptacle (13, 14) accessible à partir de la surface du sol, le connecteur (11) étant disposé avec le module de surveillance électronique (12) dans ledit réceptacle.

10. Installation selon la revendication 9, **caractérisé en ce que** le réceptacle est un boîtier solidaire du tube de bouche à clé et disposé vers l'extrémité supérieure dudit tube de bouche à clé.

## Patentansprüche

1. Anbohrschieber (1) zum Anschließen einer Abzweigleitung (4) an eine Hauptwasserleitung (2), wobei der Anbohrschieber einen Schieberkörper (23) mit einem wasserflußaufwärtigen Loch (15.1) für den Anschluß an die Hauptwasserleitung (2), einem wasserflußabwärtigen Loch (17.1) für den Anschluß an die Abzweigleitung (4) und Mitteln (8, 20, 20') zum Betätigen des Schiebers, die eine in einer im Körper (23) des Schiebers (1) zwischen den beiden Löchern ausgebildeten Betätigungskammer (16) angeordnete Kugel (20, 20') aufweisen, aufweist und wobei die Betätigungskammer (16) durch einen wasserflußaufwärtigen Kanal (21) eines wasserflußaufwärtigen Nippels (15) des Körpers mit dem wasserflußaufwärtigen Loch (15.1) verbunden ist, die Betätigungsmittel einerseits ein Hindurchführen eines Werkzeugs (26) zum Anbohren der Hauptwasserleitung (2) und andererseits die Steuerung des Drehens der Kugel (20; 20') zum Herstellen einer Verbindung zwischen dem wasserflußaufwärtigen Loch und dem wasserflußabwärtigen Loch zum Öffnen des Schiebers oder zur Unterbrechung der Verbindung zum Schließen des Schiebers und insbesondere zum Schließen des Schiebers nach dem Anbohren erlauben, um das Bohrwerkzeug (26) ohne Undichtigkeit herausnehmen zu können, während die Hauptwasserleitung unter Druck ist,
**dadurch gekennzeichnet, daß** der Schieber Mittel zum Auffinden einer Undichtigkeit aufweist, die ein am Körper (23) des Schiebers befestigtes Hydrophon (9), ein Anschlußkabel (10) und ein elektronisches Überwachungsmodul (12) aufweisen, wobei das Hydrophon am Schieber befestigt ist und die Wandung des Schiebers wasserdicht durchquert, wobei das Hydrophon (9) ein im Schieber mit Wasserkontakt gelagertes Schallaufnahmeende und ein entgegengesetztes, außerhalb des Schiebers gelegenes Anschlußende aufweist, wobei das Anschlußende ein Ende des Anschlußkabels (10), das an seinem anderen Ende einen Stecker (11) aufweist, wasserdicht aufnimmt, wobei der Stecker (11) mit dem elektronischen Überwachungsmodul (12) verbunden ist, wobei das Schallaufnahmeende des Hydrophons so angeordnet ist, das es mechanisch nicht mit der Kugel zusammenkommt und daß es beim Einbau des Anbohrschiebers in die Hauptwasserleitung (2) beim Anbohren der Hauptwasserleitung (2) mechanisch nicht mit dem Durchgang des Bohrwerkzeugs (26) zusammenkommt, und
daß das Hydrophon (9) die Wandung der Betätigungskammer (16) durchquert, wobei das Schallaufnahmeende des Hydrophons in einem Eingangsteil (19) der Betätigungskammer endet, wobei dieser Eingangsteil (19) der Betätigungskammer wassermäßig mit dem wasserflußaufwärtigen Kanal (21) des Schiebers wenigstens dann verbunden ist, wenn die Betätigungsmittel (8, 20; 20') in Öffnungsstellung sind.

2. Anbohrschieber gemäß Anspruch 1, **dadurch gekennzeichnet, daß** in der Kugel (20) ein T-Durchbruch (18) eingerichtet ist, um eine wassermäßige Verbindung des Eingangsteils (19) der Betätigungskammer (16) mit dem wasserflußaufwärtigen Kanal (21) des Schiebers (1) herzustellen, wenn die Betätigungsmittel (8, 20) in der Öffnungsstellung sind.

3. Anbohrschieber gemäß Anspruch 1, **dadurch gekennzeichnet, daß** in der Kugel (20') ein doppelter T-Durchbruch (18; 18')eingerichtet ist, um eine wassermäßige Verbindung des Eingangsteils (19) der Betätigungskammer (16) mit dem wasserflußaufwärtigen Kanal (21) des Schiebers (1) sowohl dann herzustellen, wenn die Betätigungsmittel (8; 20) in der Öffnungsstellung sind, als auch, wenn sie in der Schließstellung (18; 18') sind.

4. Anbohrschieber gemäß einem der vorangehenden Ansprüche, **dadurch gekennzeichnet, daß** er ein Anschlagmittel aufweist, das das Einführen des Schallaufnahmeendes des Hydrophons (9) in den Schieber begrenzt.

5. Anbohrschieber gemäß einem der vorangehenden Ansprüche, **dadurch gekennzeichnet, daß** er Mittel aufweist, die ermöglichen, die Abzweigleitung (4) wahlweise auf der Bohrachse (25) der Hauptwasserleitung (2) oder senkrecht zur Bohrachse der Hauptwasserleitung anzuordnen.

6. Anbohrschieber gemäß einem der vorangehenden Ansprüche, **dadurch gekennzeichnet, daß** der Sensor des Hydrophons außerdem in akustischem Kontakt mit der Wandung des Schiebers steht, um gleichzeitig die durch die Wandung des Schiebers übertragenen akustischen Vibrationen messen zu können.

7. Anbohrschieber gemäß einem der vorangehenden Ansprüche, **dadurch gekennzeichnet, daß** er einen zusätzlichen, mit der Betätigungskammer verbundenen Nippel aufweist, wobei der zusätzliche Nippel das Hydrophon aufnehmen kann oder, in einer anderen Einbauanordnung, zum Anschließen der Abzweigleitung dienen kann oder aber die Betätigungsmittel aufnehmen kann, wobei der wasserflußabwärtige Nippel dann das Hydrophon anstelle der Abzweigleitung aufnimmt.

8. Anbohrschieber gemäß Anspruch 7, **dadurch gekennzeichnet, daß** er vier Nippel aufweist, einen davon wasserflußaufwärtig auf der Seite der Hauptleitung, wobei die anderen drei Nippel strukturell identisch sind und so ausgelegt sind, daß sie eines der folgenden Elemente aufnehmen können: die Betätigungsmittel, das Hydrophon, die Abzweigleitung, um mit diesem Schieber mit Hydrophon einen auf der oberen Seite, an der rechten Seite oder an der linken Seite gelegenen Anschluß herstellen zu können.

9. Installation zum Anschließen einer Abzweigleitung an eine Hauptleitung durch einen Schieber (1) mit Betätigungsmitteln (8, 20; 20'), wobei die Installation im Boden vergraben ist, die Betätigungsmittel auf Entfernung von der Bodenoberfläche aus mit dem unteren Ende eines Rohrs mit schlüsselartigem Ende (6), das an der Bodenoberfläche endet, zugänglich sind, **dadurch gekennzeichnet, daß** der Schieber ein Schieber mit Hydrophon (9), Anschlußkabel (10) und elektronischem Überwachungsmodul (12) nach einem der vorangehenden Ansprüche ist und daß das Hydrophon ein Anschlußkabel aufweist, das an seinem freien Ende einen Stecker aufweist und daß das Anschlußkabel entlang des Rohrs mit schlüsselartigem Ende bis zu einem von der Bodenoberfläche aus zugänglichen Aufnahmegehäuse nach oben führt, wobei der Stecker (11) mit dem elektronischen Überwachungsmodul (12) zusammen in dem besagten Aufnahmegehäuse angeordnet ist.

10. Installation gemäß Anspruch 9, **dadurch gekennzeichnet, daß** das Aufnahmegehäuse ein mit dem Rohr mit schlüsselartigem Ende verbundenes festes Gehäuse ist und am oberen Ende des Rohrs mit schlüsselartigem Ende angeordnet ist.

## Claims

1. A connecting valve (1) for connecting a bypass pipe (4) to a main water line (2), said valve including a valve body (23) with an upstream orifice (15.1) intended to be connected to the main line (2), a downstream orifice (17.1) intended to be connected to the bypass pipe (4) and valve operating means (8, 20, 20') including a sphere (20, 20') arranged in an operating chamber (16) provided in the body (23) of the valve (1) between the two orifices, and the operating chamber (16) being connected to the upstream orifice (15.1) by an upstream channel (21) of an upstream nipple (15) of the body, the operating means allowing, on the one hand, the passage of a tool (26) for drilling the main line (2), and on the other hand, the control of rotation of the sphere (20 ; 20') for putting the upstream orifice and the downstream orifice in communication in order to open the valve, or for suppressing the communication in order to close the valve and, in particular, to close the valve after the drilling so as to be able to remove the drilling tool (26) with no leakage whereas the main line is under pressure,
**characterized in that** the valve includes leakage detection means including a hydrophone (9) fixed to the body (23) of the valve, a connection cable (10) and an electronic monitoring module (12), the hydrophone being fixed to the valve by passing tightly through the wall of said valve, the hydrophone (9) including a sound pick-up end arranged in the valve in contact with water, and, at the opposite, a connection end placed outside the valve, the connection end receiving tightly an end of the connection cable (10) having a connector (11) at its other end, said connector (11) being connected to the electronic monitoring module (12), said sound pick-up end of the hydrophone being positioned so as not to mechanically interfere with the sphere, and, during the installation of the connecting valve on the main line (2), not to mechanically interfere with the passage of the drilling tool (26) during the drilling of the main line (2), and
**in that** the hydrophone (9) passes through the wall of the operating chamber (16), the sound pick-up end of said hydrophone arriving in a reception part (19) of the operating chamber (16), this reception part (19) of the operating chamber being put in hydric communication with the upstream channel (21) of the valve at least when the operating means (8, 20; 20') are in open configuration.

2. The valve according to claim 1, **characterized in that** a T-shaped piercing (18) is arranged in the sphere (20) to place in hydric communication the reception part (19) of the operation chamber (16) with the upstream channel (21) of the valve (1) when the operating means (8, 20) are in open configuration.

3. The valve according to claim 1, **characterized in that** a double T-shaped piercing (18; 18') is arranged in the sphere (20') to place in hydric communication the reception part (19) of the operating chamber (16) with the upstream channel (21) of the valve (1) both when the operating means (8; 20') are in open configuration and when they are in closed configuration (18; 18').

4. The valve according to any one of the preceding claims, **characterized in that** it includes stop means limiting the introduction of the sound pick-up end of the hydrophone (9) into the valve.

5. The valve according to any one of the preceding claims, **characterized in that** it includes means allowing to optionally place the bypass duct (4) on the drilling axis (25) of the main line (2) or perpendicularly to the drilling axis (25) of the main line.

6. The valve according to any one of the preceding claims, **characterized in that** the sensor of the hydrophone is further in acoustic contact with the wall of the valve, so as to also be able to measure the acoustic vibrations transmitted by the wall of the valve.

7. The valve according to any one of the preceding claims, **characterized in that** it includes an additional nipple connected to the operating chamber, said additional nipple being able to receive the hydrophone or, in another configuration of installation, being able to serve for the connection of the bypass pipe, or being able to receive the operating means, the downstream nipple then receiving the hydrophone instead of said bypass pipe.

8. The valve according to claim 7, **characterized in that** it includes four nipples, including an upstream nipple on the main pipe side, the three other nipples being structurally identical and configured to each receive one of the following elements: the operating means, the hydrophone, the bypass pipe, so as to be able to perform a connection by the top, by the right side or by the left side with said same hydrophone valve.

9. An installation for connecting a bypass pipe to a main line by means of a connecting valve (1) including operating means (8, 20; 20'), the connection installation being buried into a ground, the valve operating means being accessible remotely from the surface of the ground at the lower end of a curb box tube (6) appearing at the surface of the ground, **characterized in that** the valve is a connecting valve with a hydrophone (9), a connection cable (10) and an electronic monitoring module (12) according to any one of the preceding claims, and **in that** the hydrophone includes a connection cable including at its free end a connector (11) and **in that** said connection cable goes up along the curb box tube towards a receptacle (13, 14) accessible from the surface of the ground, the connector (11) being arranged with the electronic monitoring module (12) in said receptacle.

10. The installation of claim 9, **characterized in that** the receptacle is a case integral with the curb box tube and arranged towards the upper end of said curb box tube.
